# EUROPEAN PATENT SPECIFICATION

(11) **EP 1 841 153 B1**
(45) Date of publication and mention of the grant of the patent: **04.11.2009**
(21) Application number: 07006425.8
(22) Date of filing: 28.03.2007
(51) Int. Cl.: H04L 12/66, H04L 29/06

(54) **Method and media gateway for realizing packet-packet model session**
Verfahren und Media-Gateway zur Durchführung von Paket-Paket-Modellsitzungen
Procédé et passerelle de support pour la réalisation d'une session de modèle paquet-paquet

(30) Priority: 29.03.2006 CN 200610034804
(43) Date of publication of application: 03.10.2007
(73) Proprietor: Huawei Technologies Co., Ltd., Longgang District Shenzhen Guangdong 518129 (CN)
(72) Inventor: Wang, Dahai I.P.D., Huawei Administration Building, Shenzhen, Guangdong Province 518129 (CN)
(74) Representative: Epping - Hermann - Fischer

(56) References cited:
- US-A1- 2004 252 681
- "Universal Mobile Telecommunications System (UMTS)" ETSI STANDARDS, EUROPEAN TELECOMMUNICATIONS STANDARDS INSTITUTE, SOPHIA-ANTIPO, FR, vol. 3-CN4, no. V630, September 2005 (2005-09), XP014032454 ISSN: 0000-0001

## Description

### Field of the Invention

The present invention relates to media bearing technology in communication field, and more particularly to a method and a media gateway for realizing a packet-packet model session.

### Background of the Invention

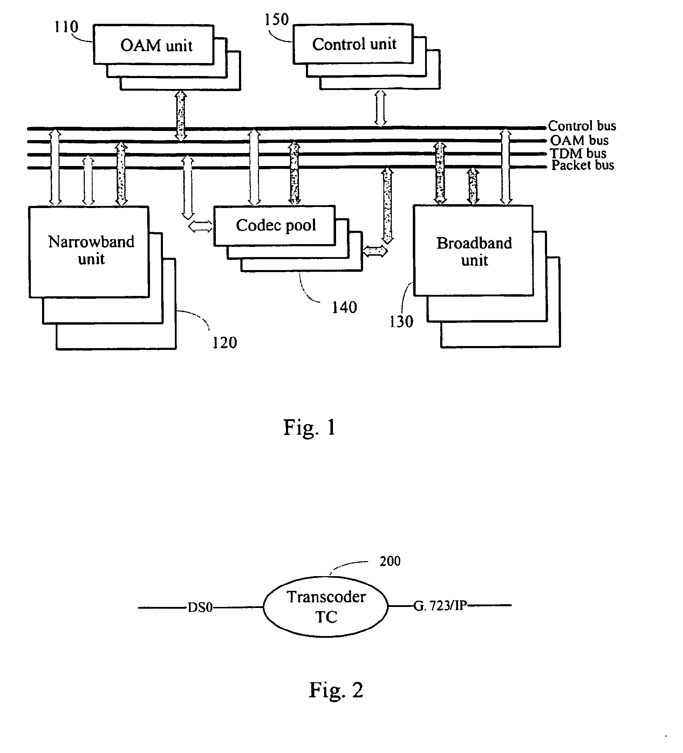

In a separated architecture, a flexible Media Gateway (MGW), which is capable of supporting integrated services and can evolve for long, may adopt the logical structure shown in Fig. 1. In Fig. 1, an MGW 100 includes an Operation Administration Maintenance (OAM) unit 110, a narrowband unit 120, a broadband unit 130, a codec pool 140 and a control unit 150.

The OAM unit 110 provides a function of operating and maintaining the whole system, and an interface to an external operating support system. The narrowband unit 120 provides an interface to the narrowband side and corresponding protocol processing functions. The broadband unit 130 provides an interface to the broadband side and corresponding protocol processing functions. The codec pool 140 provides media processing resources, such as a Transcoder (TC) for code conversion. The control unit 150 provides a vertical interface to a Media Gateway Controller (MGC), processes control commands from the MGC, and drives, according to the control commands, the internal components such as the narrowband unit 120, the broadband unit 130 and the codec pool 140 etc. to operate, for example, to insert a TC between terminations with different bearer formats, to activate the Tandem Free Operation (TFO) protocol on the TC, and to connect directly bearer terminations on the both sides of a session in the case that the condition for Transcoder Free Operation (TrFO) is met, and so on.

An important function of the MGW is to perform a conversion between two bearer formats and a conversion between two media formats, which is implemented by a TC in the codec pool. Depending on the prior codec art, a TC is generally implemented as such a structure that one end adopts Pulse Code Modulation (PCM) and the other end adopts packet compression. Such a structure may easily realize the codec conversion for a TDM-packet session model (which means that in a session, the bearer format on one end is based on Time Division Multiplexing (TDM) technology and that of the other end is based on packet technology). Fig. 2 is a schematic diagram illustrating the codec of a TC in the prior art. A digital speech signal DS0 is processed with a G.723 compression algorithm by a TC 200, resulting in a compressed speech frame G.723/IP.

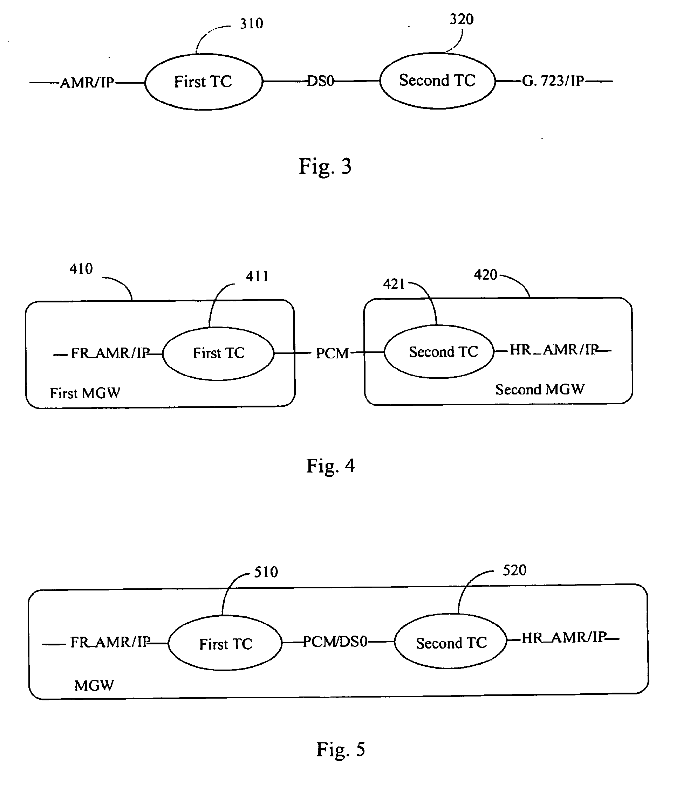

In fact, a packet-packet session model (which means that the bearer formats of both session ends are based on packet technology) also needs a similar codec conversion. It is difficult to realize a direct conversion from packet codec to packet codec due to the complexity of technical realization. However, the conversion of any packet codec to any packet codec may be realized by using two TCs in TDM-packet model and connecting the PCM side of each TC in tandem. Two tandem connected TCs are called back-to-back TCs. Fig. 3 is a schematic diagram illustrating a pair of back-to-back TCs in the prior art. As shown in Fig. 3, in one direction, a speech frame compressed by an Adaptive Multi-Rate (AMR) algorithm is recovered to sampling signals over an in-between DS0 by a first TC 310; and then a second TC 320 compresses the signals to a corresponding compression speech frame (which is different from the above speech frame compressed by AMR algorithm) according to the G.723 algorithm. In the other direction, a similar process is performed. However, every codec will bring a certain degradation of voice quality.

In the prior art, two methods may be used to transmit codes directly without codec conversion, which are the so-called TrFO and TFO functions.

TFO is an in-band communication technology. The used codecs are negotiated after a call is set up. In the case that the negotiation result indicates the used codecs on both ends of the call meet a TFO compatibility condition, the codec function of the two ends is bypassed and compressed speech frames are transmitted directly to the receiving end.

Fig. 4 is a schematic diagram illustrating the logical structure of a TFO model in the prior art. The compression algorithms of the two ends are FR_AMR and HR_AMR respectively. A first TC 411 and a second TC 421 pertain to a first MGW 410 and a second MGW 420 respectively, and are connected via a TDM circuit which has a structure based on PCM sampling encoding. The first TC 410 and the second TC 420 transfer TFO information by a part of bits of the sample signals on the TDM circuit, and carry out the TFO negotiation under the control of an MGC (not shown in Fig. 4).

TrFO is an out-of-band code conversion controlling technology, and networks may negotiate codec types and modes before a call is established. In the case that the codecs used by both ends of the call meet a TrFO compatibility condition (for example, which are both AMR codec and have the same configuration), the call may be performed without a codec conversion.

Referring again to the logical structure of the MGW illustrated by Fig. 1, TFO operations are implemented by a TC in the codec pool, and TrFO are mainly implemented as control and coordination operations. Whether for the TFO or TrFO operations, the control and coordination are carried out in the control unit 150. Generally, during such an operation, the control unit 150 will also interact with the MGC. For example, the activating/deactivating of the TFO is controlled by the MGC, and the determining of the TrFO operation condition is implemented according to media codec parameters from the MGC.

For some media gateways, it is impossible to implement the TrFO due to the structure limitation of those media gateways, such as lacking an appropriate packet switching plane which is one of the important technique elements for TrFO operations. For such gateways, the described two back-to-back TCs may be utilized to realize a packet-packet bearer conversion.

For some other media gateways, it is possible to only partially implement the TrFO protocol due to the technical complexity. For example, with respect to a 3G call, Adaptive Multiple Rate (AMR) codec is used and TrFO condition is met when Active Codec Mode Set (ACS) of both sides are compatible and the used codec modes can be limited into a public subset by means of rate control. However, because implementation of rate coordination is relatively complex and may have a certain influence on system performance, it may be abandoned in realizing the system, and as a result, in this case, it is still required to insert TCs for a packet-packet session mode, for example, a pair of back-to-back TCs may be inserted in a media gateway adopting back-to-back TC technology.

For media gateways which do not support the TrFO or support the TrFO limitedly, such as the above two types of media gateways, inserting a pair of back-to-back TCs will result in the degradation of voice quality, since after a pair of back-to-back TCs are inserted for a session which meets a TrFO/TFO condition, each codec will bring a certain injury to voice quality.

### Summary of the Invention

In view of the cases that the TrFO ability is not supported or is supported limitedly, in embodiments of the present invention, there are provided a method and a media gateway for realizing a packet-packet model session which may reduce the voice quality deterioration.

According to a first embodiment of the present invention, there is provided a method for realizing a packet-packet model session, including: inserting a pair of back-to-back Transcoders (TCs) in the case of determining not to adopt the Transcoder Free Operation (TrFO) to process the session; activating the pair of back-to-back TCs such that the pair of back-to-back TCs perform a Tandem Free Operation (TFO) negotiation; and enabling the pair of back-to-back TCs to operate in a pass-through mode after the negotiation is passed.

According to a second embodiment of the present invention, there is provided a media gateway, including: a control unit and a codec pool unit. The control unit is adapted to instruct the codec pool unit to insert a pair of back-to-back TCs in the case of determining not to adopt the TrFO protocol to process a session which meets a packet-packet model, and to instruct the codec pool unit to activate the pair of back-to-back TCs such that the pair of back-to-back TCs perform a TFO negotiation; and the pair of back-to-back TCs are adapted to perform the TFO negotiation, and to operate in a pass-through mode so as to transfer a compressed speech transparently after the TFO negotiation is passed.

Further embodiments are presented in the respective dependent claims.

According to the embodiments of the present invention, in the case of a media gateway which does not support or supports the TrFO ability limitedly while has implemented the TFO protocol and a pair of back-to-back TCs, when a speech call meets a TrFO condition, the codec function of the pair of back-to-back TCs still may be bypassed by activating the pair of back-to-back TCs to perform a TFO negotiation, so as to improve voice quality.

### Brief Description of the Diagrams

Fig. 1 is a schematic diagram illustrating the logical structure of an MGW in the prior art;
Fig. 2 is a schematic diagram illustrating the codec of a TC in the prior art;
Fig. 3 is a schematic diagram illustrating a pair of back-to-back TCs in the prior art;
Fig. 4 is a schematic diagram illustrating the logical structure of a TFO model in the prior art;
Fig. 5 is a schematic diagram illustrating the logical structure of a back-to-back model according to an embodiment of the present invention;
Fig. 6 is a flow chart illustrating a method for realizing a packet-packet model session according to an embodiment of the present invention;
Fig. 7 is a schematic diagram illustrating the structure of a media gateway according to an embodiment of the present invention;
Fig. 8 is a block diagram illustrating the structures of a control unit and a codec pool in the media gateway according to an embodiment of the present invention;
Fig. 9 is a schematic diagram illustrating the transparent transmission of a compressed speech according to an embodiment of the present invention.

### Detailed Description of the Embodiments

Fig. 5 is a schematic diagram illustrating the logical structure of a back-to-back model according to an embodiment of the present invention. The compression algorithms of the two ends are FR_AMR and HR_AMR respectively. A first TC 510 and a second TC 520 pertain to the same MGW, and are connected to each other via an internal time division switching bus of the MGW. The time division switching bus operates based on PCM sampling signal principle.

In the embodiment, the pair of back-to-back TCs essentially refer to two independent TCs 510 and 520 connected with each other via a TDM channel on which a TFO operation may be performed. In stead of being enabled or disabled under the control of the MGC, the TFO operation is activated and deactivated by the MGW itself, because such a packet-packet topology with a pair of back-to-back TCs connection does not meet a TFO operation condition from the view of the MGC.

A detailed operation process according to preferred embodiments of the present invention is described hereunder.

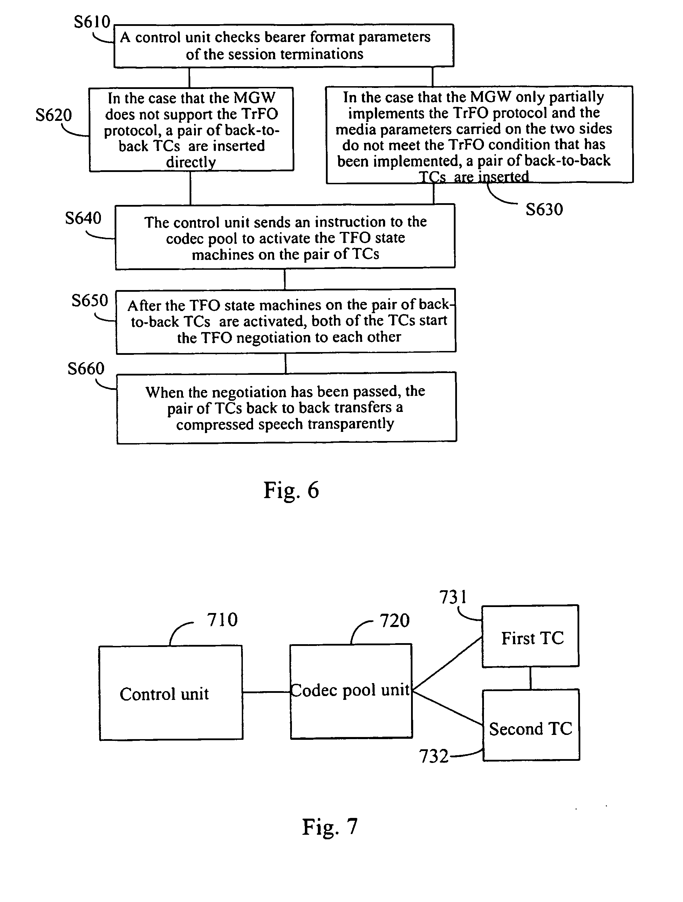

Referring to Fig. 6, the process according to an embodiment of the present invention includes the steps as follows.

In step S610, a control unit checks bearer format parameters of the session terminations when processing a command from an MGC.

In step S620, for a session meeting a packet-packet model: in the case that the MGW does not support the TrFO protocol, a pair of back-to-back TCs are inserted directly.

In step S630, in the case that the MGW only partially implements the TrFO protocol (which refers to the case that a session partially meeting a TrFO condition is treated as a session not meetting the condition), a pair of back-to-back TCs are inserted when it is checked that the media parameters carried on both sides of the session do not meet the TrFO condition that has been implemented.

In step S640, according to the embodiment, when the pair of back-to-back TCs are inserted, the control unit sends an instruction to the codec pool by itself (without the MGC's control) to activate the TFO state machines on the two TCs bundled to each other.

In step S650, after the TFO state machines on the two back-to-back TCs are activated, both of the TCs start the TFO negotiation to each other.

In step S660, in the case that the negotiation is passed, the two TCs will work in a pass-through mode. That is, the codec function is bypassed and the compressed speech is transferred transparently. Therefore the voice quality loss may be avoided.

Fig. 7 is a schematic diagram illustrating the structure of a media gateway according to an embodiment of the present invention.

The MGW in the embodiment of the present invention includes a control unit 710, a codec pool unit 720.

The codec pool unit 720 provides a pair of back-to-back TCs. The pair of back-to-back TCs include a first TC 731 and a second TC 732 which are connected with each other via an internal time division switching bus of the MGW.

The control unit 710 is adapted to instruct the codec pool unit 720 to insert the pair of back-to-back TCs and activate the first TC 731 and the second TC 732 for performing the TFO negotiation, in the case that it is determined the TrFO protocol is not employed to process sessions which meet the packet-packet model.

The first TC 731 and the second TC 732 are adapted to perform a TFO negotiation and transfer a compressed speech transparently after the TFO negotiation is passed.

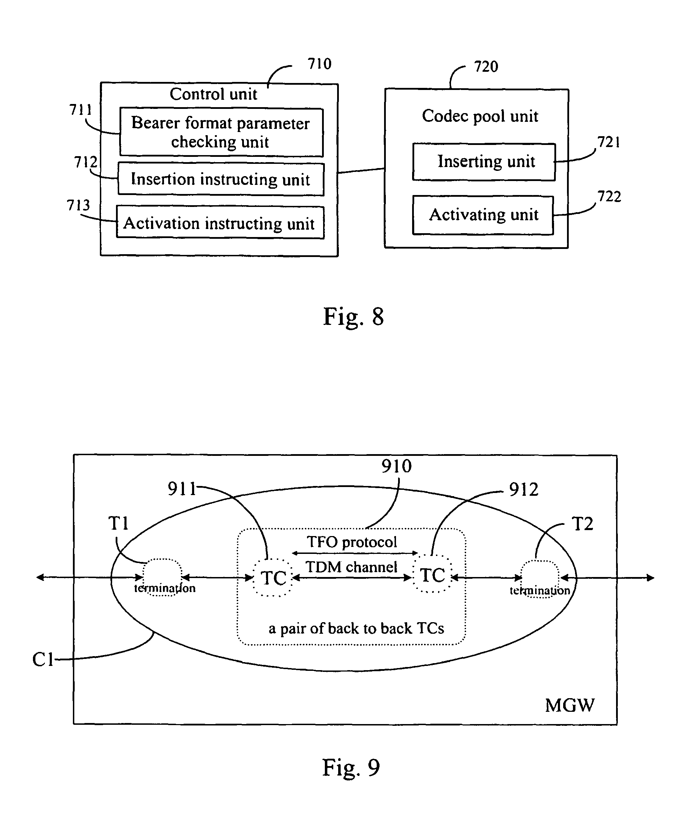

Referring to Fig. 8, according to an embodiment of the present invention, the control unit 710 includes:
a bearer format parameter checking unit 711, which is adapted to check the bearer format parameters of the terminations of a session when processing a command from the MGW, and to determine whether to adopt the TrFO protocol to process the session;
an insertion instructing unit 712, which is adapted to instruct the codec pool unit 720 to insert the pair of back-to-back TCs when the bearer format parameter checking unit 711 determines not to adopt the TrFO protocol to process the session;
an activation instructing unit 713, which is adapted to instruct the codec pool unit 720 to activate the first TC 731 and the second TC 732 to perform the TFO negotiation after the pair of back-to-back TCs are inserted.

The codec pool unit 720 includes:
an inserting unit 721, which is adapted to insert the pair of back-to-back TCs according to an instruction provided by the insertion instructing unit 712;
an activating unit 722, which is adapted to activate the first TC 731 and the second TC 732 according to an instruction provided by the activation instructing unit 713 such that the two TCs perform the TFO negotiation.

Fig. 9 is a schematic diagram illustrating the transparent transmission of a compressed speech according to an embodiment of the present invention. As shown in Fig. 9, C1 is an example of the Context of H.248, and T1 and T2 are examples of the Termination of H.248. The C1 correlates the T1 with the T2, for example, designates that the media streams input into the T1 is output from the T2, or vice versa. According to the embodiment of the present invention, in the case of MGW 900 which does not support or supports the TrFO ability limitedly while has implemented the TFO protocol and the pair of back-to-back TCs 910, when a speech call meets a TrFO condition, a TFO negotiation still may be performed between TC 911 and TC 912, and the codec function of the pair of back-to-back TCs may be bypassed so as to improve voice quality.

It is noted that the embodiments of the present invention are applicable not only to a media gateway, but also to the similar devices which have a media gateway function.

Though the present invention is described above in preferred embodiments, it is noted that those skilled in the art may make modifications and variations, without departing from the basic principle of the present invention; any of those modifications and variations shall fall into the protected scope of the present invention defined by the following claims.

## Claims

1. A method for realizing a packet-packet model session, comprising:
inserting a pair of Transcoders (TCs) back-to-back in the case of determining not to adopt the Transcoder Free Operation (TrFO) to process the session;
activating the pair of back-to-back Transcoders such that the pair of back-to-back Transcoders perform a Tandem Free Operation (TFO) negotiation; and
enabling the pair of back-to-back Transcoders to operate in a pass-through mode after the negotiation is passed.

2. The method according to claim 1, wherein the processes of inserting the pair of back-to-back Transcoders and activating the pair of back-to-back Transcoders are implemented by a media gateway.

3. The method according to claim 1 or 2, wherein the case of determining not to adopt the Transcoder Free Operation protocol to process the session comprises that the media gateway does not support the Transcoder Free Operation protocol or implements the Transcoder Free Operation protocol partially.

4. The method according to claim 1 or 2, wherein the process of determining not to adopt the Transcoder Free Operation protocol to process the session comprises:
checking whether media parameters carried by both sides of the session meet a Transcoder Free Operation condition implemented in the media gateway.

5. The method according to claim 1 or 2, wherein the process of determining not to adopt the Transcoder Free Operation protocol to process the session comprises:
checking, by a control unit of the media gateway, bearer format parameters of terminations of the session; when the media gateway does not support the Transcoder Free Operation protocol or media parameters carried by both sides of the session do not meet a Transcoder Free Operation condition implemented in the media gateway, determining not to adopt the Transcoder Free Operation protocol to process the session.

6. The method according to claim 5, wherein the process of inserting the pair of back-to-back Transcoders comprises:
sending, by the control unit of the media gateway, to a codec pool of the media gateway an instruction of inserting the pair of back-to-back Transcoders; and
inserting, by the codec pool, the pair of back-to-back Transcoders according to the instruction.

7. The method according to claim 6, wherein the process of activating the pair of back-to-back Transcoders comprises:
sending, by the control unit, the activation instruction to the codec pool; and
activating, by the codec pool, the Tandem Free Operation negotiation of the pair of back-to-back Transcoders according to the instruction.

8. The method according to claim 7, wherein the process of activating the Tandem Free Operation negotiation of the pair of back-to-back Transcoders are implemented by activating state machines on the pair of back-to-back Transcoders.

9. A media gateway, comprising a control unit and a codec pool unit, wherein
the control unit is adapted to instruct the codec pool unit to insert a pair of back-to-back Transcoders in the case of determining not to adopt the Transcoder Free Operation protocol to process a session which meets a packet-packet model, and to instruct the codec pool unit to activate the pair of back-to-back Transcoders such that the pair of back-to-back Transcoders perform a Tandem Free Operation negotiation; and
the pair of back-to-back Transcoders are adapted to perform the Tandem Free Operation negotiation, and to operate in a pass-through mode so as to transfer a compressed speech transparently after the Tandem Free Operation negotiation is passed.

10. The media gateway according to claim 9, wherein the control unit comprises
a bearer format parameter checking unit, adapted to check bearer format parameters of terminations of the session and determine whether to adopt the Transcoder Free Operation protocol to process the session;
an insertion instructing unit, adapted to instruct the codec pool unit to insert the pair of back-to-back Transcoders when the bearer format parameter checking unit determines not to adopt the Transcoder Free Operation protocol to process the session; and
an activation instructing unit, adapted to instruct the codec pool unit to activate the inserted pair of back-to-back Transcoders such that the inserted pair of back-to-back Transcoders perform the Tandem Free Operation negotiation.

11. The media gateway according to claim 10, wherein the codec pool unit comprises
an inserting unit, adapted to insert the pair of back-to-back Transcoders according to an instruction provided by the insertion instructing unit; and
an activating unit, adapted to activate the pair of back-to-back Transcoders according to an instruction provided by the activation instructing unit such that the pair of back-to-back Transcoders perform the Tandem Free Operation negotiation.

## Patentansprüche

1. Verfahren zum Durchführen einer Sitzung nach dem Packet-Packet-Modell, umfassend:
Einfügen eines Paars von Transcodern (TCs), back-to-back, in dem Fall, in dem entschieden wird, nicht den Transcoder-freien Betrieb (TrFO) zu wählen, um die Sitzung abzuwickeln;
Aktivieren des Paars von Back-To-Back-Transcodern so, dass das Paar von Back-To-Back-Transcodern eine tandembetriebsfreie (TFO) Negotiation durchführt; und
Ermöglichen des Betriebs des Paars von Back-To-Back-Transcodern in einem Pass-Through-Modus nach Durchlaufen der Negotiation.

2. Verfahren nach Anspruch 1, wobei die Prozesse des Einfügens des Paars von Back-To-Back-Transcodern und des Aktivierens des Paars von Back-To-Back-Transcodern durch ein Media-Gateway umgesetzt werden.

3. Verfahren gemäß Anspruch 1 oder 2, wobei der Entscheidungsfall, zum Abwickeln der Sitzung nicht das Protokoll zum Transcoder-freien Betrieb zu wählen, umfasst, dass das Media-Gateway nicht das Protokoll zum Transcoder-freien Betrieb unterstützt oder das Protokoll zum Transcoder-freien Betrieb teilweise umsetzt.

4. Verfahren gemäß Anspruch 1 oder 2, wobei der Entscheidungsprozess, zum Abwickeln der Sitzung nicht das Protokoll zum Transcoder-freien Betrieb zu wählen, umfasst:
Überprüfen, ob durch beide Seiten der Sitzung geführte Medienparameter zu einer im Media-Gateway implementierten Bedingung zum Transcoder-freien Betrieb passen.

5. Verfahren gemäß Anspruch 1 oder 2, wobei der Entscheidungsprozess, zum Abwickeln der Sitzung nicht das Protokoll zum Transcoder-freien Betrieb zu wählen, umfasst:
Überprüfen von Trägerformat-Parametern von Abschlüssen der Sitzung durch eine Steuereinheit des Media-Gateways; wenn das Media-Gateway nicht das Protokoll zum Transcoder-freien Betrieb unterstützt oder durch beide Seiten der Sitzung geführte Medienparameter nicht zu einer im Media-Gateway implementierten Bedingung zum Transcoder-freien Betrieb passen, Entscheiden, zum Abwickeln der Sitzung nicht das Protokoll zum Transcoder-freien Betrieb zu wählen.

6. Verfahren gemäß Anspruch 5, wobei der Prozess des Einfügens des Paars von Back-To-Back-Transcodern umfasst:
Senden einer Anweisung durch die Steuereinheit des Media-Gateways an einen Codec-Pool des Media-Gateways, das Paar von Back-To-Back-Transcodern einzufügen; und
Einfügen des Paars von Back-To-Back-Transcodern durch den Codec-Pool gemäß der Anweisung.

7. Verfahren gemäß Anspruch 6, wobei der Prozess der Aktivierung des Paars von Back-To-Back-Transcodern umfasst:
Senden der Aktivierungsanweisung durch die Steuereinheit an den Codec-Pool; und
Aktivieren der tandembetriebsfreien Negotiation des Paars von Back-To-Back-Transcodern durch den Codec-Pool gemäß der Anweisung.

8. Verfahren nach Anspruch 7, wobei der Prozess des Aktivierens der tandembetriebsfreien Negotiation des Paars von Back-To-Back-Transcodern durch Aktivieren von Zustandsmaschinen auf dem Paar von Back-To-Back-Transcodern umgesetzt werden.

9. Media-Gateway, umfassend eine Steuereinheit und eine Codec-Pool-Einheit, wobei
die Steuereinheit geeignet ist, die Codec-Pool-Einheit anzuweisen, im Falle der Entscheidung, zum Abwickeln einer zu einem Packet-Packet-Modell passenden Sitzung nicht das Protokoll zum Transcoder-freien Betrieb zu wählen, ein Paar von Back-To-Back-Transcodern einzufügen, und die Codec-Pool-Einheit anzuweisen, das Paar von Back-To-Back-Transcodern so zu aktivieren, dass das Paar von Back-To-Back-Transcodern eine tandembetriebsfreie Negotiation durchführt; und
das Paar von Back-To-Back-Transcodern geeignet ist, die tandembetriebsfreie Negotiation durchzuführen und in einem Pass-Through-Modus zu arbeiten, sodass es ein komprimiertes Sprachsignal transparent überträgt, nachdem die tandembetriebsfreie Negotiation durchlaufen wurde.

10. Media-Gateway gemäß Anspruch 9, wobei die Steuereinheit umfasst:
eine Überprüfungseinheit für Trägerformat-Parameter, geeignet zum Überprüfen von Trägerformat-Parametern von Abschlüssen der Sitzung und zum Entscheiden, ob zum Abwickeln der Sitzung das Protokoll zum Transcoder-freien Betrieb zu wählen ist;
eine Einheit für die Einfügungsanweisung, geeignet, die Codec-Pool-Einheit anzuweisen, das Paar von Back-To-Back-Transcodern einzufügen, wenn die Überprüfungseinheit für Trägerformat-Parameter entscheidet, zum Abwickeln der Sitzung nicht das Protokoll zum Transcoder-freien Betrieb zu wählen; und eine Einheit für die Aktivierungsanweisung, geeignet, die Codec-Pool-Einheit anzuweisen, das Paar von eingefügten Back-To-Back-Transcodern so zu aktivieren, dass das Paar von eingefügten Back-To-Back-Transcodern die tandembetriebsfreie Negotiation durchführt.

11. Media-Gateway gemäß Anspruch 10, wobei die Codec-Pool-Einheit umfasst
eine Einfügungseinheit, geeignet, das Paar von Back-To-Back-Transcodern gemäß einer durch die Einheit für die Einfügungsanweisung gegebenen Anweisung einzufügen; und
eine Aktivierungseinheit, geeignet, das Paar von Back-To-Back-Transcodern gemäß einer durch die Einheit für die Aktivierungsanweisung gegebenen Anweisung so zu aktivieren, dass das Paar von Back-To-Back-Transcodern die tandembetriebsfreie Negotiation durchführt.

## Revendications

1. Procédé pour réaliser une session de modèle paquet-paquet comprenant:
l'insertion d'une paire de transcodeurs (TC) dos à dos dans le cas où il est déterminé de ne pas adopter le mode d'exploitation sans transcodage (TrFO) pour exécuter la session;
l'activation de la paire de transcodeurs dos à dos de telle manière que ladite paire de transcodeurs dos à dos effectue une négociation du mode d'exploitation sans transcodage (TFO); et
l'habilitation de la paire de transcodeurs dos à dos pour fonctionner en mode d'intercommunication après avoir conclu la négociation.

2. Procédé selon la revendication 1, dans lequel les procédures d'insertion et d'activation de la paire de transcodeurs dos à dos sont mises en oeuvre par une passerelle de médias.

3. Procédé selon la revendication 1 ou 2, dans lequel le cas où il est déterminé de ne pas adopter le protocole d'exploitation sans transcodage pour exécuter la session implique que la passerelle de médias ne supporte pas ledit protocole ou qu'elle ne le met que partiellement en oeuvre.

4. Procédé selon la revendication 1 ou 2, dans lequel la procédure de détermination de ne pas adopter le protocole d'exploitation sans transcodage pour exécuter la session comprend : la vérification des paramètres média transportés par les deux parties de la session pour s'assurer qu'ils répondent à une condition d'exploitation sans transcodage mise en oeuvre par la passerelle de médias.

5. Procédé selon la revendication 1 ou 2, dans lequel la procédure de détermination de ne pas adopter le protocole d'exploitation sans transcodage pour exécuter la session comprend : la vérification, par une unité de contrôle de la passerelle de médias, des paramètres de format du support des clôtures de session ; la détermination de ne pas adopter le protocole d'exploitation sans transcodage pour exécuter la session lorsque la passerelle de médias ne prend pas en charge le protocole d'exploitation sans transcodage ou lorsque les paramètres de média transportés par les deux parties de la session ne répondent pas à une condition d'exploitation sans transcodage mise en oeuvre par la passerelle de médias.

6. Procédé selon la revendication 5, dans lequel la procédure d'insertion de la paire de transcodeurs dos à dos comprend :
l'envoi vers un groupe de codecs de la passerelle de médias, par l'unité de contrôle de la passerelle de médias, d'une instruction d'insertion de la paire de transcodeurs dos à dos; et
l'insertion, par le groupe de codecs, de la paire de transcodeurs dos à dos conformément à ladite instruction.

7. Procédé selon la revendication 6, dans lequel la procédure d'activation de la paire de transcodeurs dos à dos comprend :
l'envoi, par l'unité de contrôle vers le groupe de codecs, de l'instruction d'activation; et
l'activation, par le groupe de codecs, de la négociation de l'exploitation sans transcodage de la paire de transcodeurs dos à dos conformément à ladite instruction.

8. Procédé selon la revendication 7, dans lequel la procédure d'activation de la négociation de l'exploitation sans transcodage de la paire de transcodeurs dos à dos est mise en oeuvre en activant des machines à états sur la paire de transcodeurs dos à dos.

9. Passerelle de médias comprenant une unité de contrôle et une unité à groupe de codecs, dans laquelle
l'unité de contrôle est adaptée pour commander à l'unité à groupe de codecs d'insérer une paire de transcodeurs dos à dos dans le cas où il est déterminé de ne pas adopter le protocole d'exploitation sans transcodage pour exécuter une session qui répond à un modèle paquet-paquet, et pour commander à l'unité à groupe de codecs d'activer la paire de transcodeurs dos à dos de telle manière que ladite paire effectue une négociation du mode d'exploitation sans transcodage; et
la paire de transcodeurs dos à dos est adaptée pour effectuer la négociation du mode d'exploitation sans transcodage et pour fonctionner en mode d'intercommunication de manière à transférer de manière transparente des données vocales comprimées après avoir réalisé la négociation du mode d'exploitation sans transcodage.

10. Passerelle de médias selon la revendication 9, dans laquelle l'unité de contrôle comprend
une unité de vérification des paramètres de format du support adaptée pour vérifier les paramètres de format du support des clôtures de session et pour déterminer s'il faut adopter ou non le protocole d'exploitation sans transcodage pour exécuter la session;
une unité de commande d'insertion adaptée pour commander à l'unité à groupe de codecs d'insérer la paire de transcodeurs dos à dos lorsque l'unité de vérification des paramètres de format du support détermine de ne pas adopter le protocole d'exploitation sans transcodage pour exécuter la session; et
une unité de commande d'activation adaptée pour commander à l'unité à groupe de codecs d'activer la paire de transcodeurs dos à dos insérée, de telle manière que ladite paire insérée effectue la négociation du mode d'exploitation sans transcodage.

11. Passerelle de médias selon la revendication 10, dans laquelle l'unité à groupe de codecs comprend
une unité d'insertion adaptée pour insérer la paire de transcodeurs dos à dos conformément à une instruction délivrée par l'unité de commande d'insertion; et
une unité d'activation adaptée pour activer la paire de transcodeurs dos à dos conformément à une instruction délivrée par l'unité de commande d'activation, de telle manière que ladite paire effectue la négociation du mode d'exploitation sans transcodage.
